# EUROPEAN PATENT APPLICATION

(11) **EP 2 418 832 A1**
(43) Date of publication of application: **15.02.2012**
(21) Application number: 11173895.1
(22) Date of filing: 14.07.2011
(51) Int. Cl.: H04M 1/725, G06F 17/30

(54) **Apparatus and method for sharing application with a portable terminal**

(30) Priority: 09.08.2010 KR 20100076292
(71) Applicant: Pantech Co., Ltd., Seoul 121-270 (KR)
(72) Inventor: Oh, Jang Wook, Seoul 121-270 (KR); Kim, Hyae Ran, Seoul 121-270 (KR); Park, Sung Been, Seoul 121-270 (KR); Yoon, Hyoung Sik, Seoul 121-270 (KR); Jeong, Do Won, Seoul 121-270 (KR); Jeong, Tae Wan, Seoul 121-270 (KR); Chae, Tae Ohk, Seoul 121-270 (KR)
(74) Representative: Herzog, Markus

(57) **Abstract**

A method for sharing an application between a first portable terminal (110) and a second portable terminal (120) includes the first portable terminal (110) collecting application information if an application sharing event occurs, generating a marker (112) including the application information, and displaying the marker (112); and the second portable terminal (120) capturing an image (122) of the marker (112) including application information, recognizing the marker (112), extracting the application information from the marker (112), and installing an application corresponding to the application information from the marker (112). The first portable terminal (110) includes a marker generating unit (214) to generate the marker (112) including the application information, and a display unit (270) to display the marker (112). The second portable terminal (120) includes a camera unit (380) to capture an image (122) of the marker (112), a marker recognizing unit (312) to recognize the marker (112), a marker analyzing unit (313) to extract the application information from the marker (112), and an application installing unit (315) to install the application.

## Description

### CROSS-REFERENCE TO RELATED APPLICATION

This application claims priority from and the benefit under 35 U.S.C. §119(a) of Korean Patent Application No. 10-2010-0076292, filed on August 9, 2010, which is incorporated by reference for all purposes as if fully set forth herein.

### BACKGROUND OF THE INVENTION

FIELD

Exemplary embodiments of the present invention relate to an apparatus and a method for sharing an application by portable terminals.

DISCUSSION OF THE BACKGROUND

Initially, portable terminals were provided primarily for wireless mobile communication. However, with developments in communication technologies, portable terminals are provided with a wide range of advanced functions, such as a function enabling taking an image using a digital camera attached to the portable terminals, a function enabling watching TV programs, a function enabling playing games, a function enabling web surfmg via wireless Internet, and the like, in addition to basic or simple functions such as wireless mobile communication or scheduling.

These functions may typically be performed by an application installed on the portable terminals. As the types of applications provided increases, thereby increasing frequency of use of such applications, users may desire a greater amount of various applications.

Conventionally, if a user wants to download and install an application being used by another portable terminal, the user of the other portable terminal may listen to the description about the corresponding application from the other user and memorize or write on paper information regarding the application. If the user decides to install the application, the user may search for the paper where the information of the application is written or recall the disclosed application information. Sequentially, the user may search for the information of the application in the portable terminal of the user, and then the user may download and install the application.

### SUMMARY

Exemplary embodiments of the present invention provide an apparatus and a method for sharing an application between portable terminals.

Additional features of the invention will be set forth in the description which follows, and in part will be apparent from the description, or may be learned by practice of the invention.

An exemplary embodiment of the present invention provide a portable terminal to share an application including a camera unit to capture an image of a marker including application information; a marker recognizing unit to recognize the marker; a marker analyzing unit to extract the application information from the marker; and an application installing unit to install the application corresponding to the application information of the marker.

An exemplary embodiment of the present invention provide a portable terminal to share an application including a marker generating unit to collect application information and to generate a marker including the application information; a display unit to display the marker; and an application sharing unit to control the marker generated by the marker generating unit to be displayed on the display unit if an application sharing event occurs.

An exemplary embodiment of the present invention provide a method for sharing an application between portable terminals including capturing an image of a marker including application information; recognizing the marker; extracting the application information from the marker; and installing an application corresponding to application information from the marker.

An exemplary embodiment of the present invention provide a method for sharing an application between a first portable terminal and a second portable terminal including collecting application information in the first portable terminal if an application sharing event occurs; generating a marker including the application information; and displaying the marker.

It is to be understood that both the foregoing general description and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 illustrates a system to share an application according to an exemplary embodiment of the invention.

FIG. 2 illustrates a structure of a portable terminal to share an application according to an exemplary embodiment of the invention.

FIG. 3 illustrates a structure of a portable terminal to share an application according to an exemplary embodiment of the invention.

FIG. 4 is a flowchart illustrating a method for sharing an application by a portable terminal according to an exemplary embodiment of the invention.

FIG. 5 is a flowchart illustrating a method for sharing an application by a portable terminal according to an exemplary embodiment of the invention.

FIG. 6 is a flowchart illustrating a method for sharing an application based on a function for recognizing an icon according to an exemplary embodiment of the invention.

FIG. 7 is a flowchart illustrating a method for sharing an application by a portable terminal for recognizing an icon according to an exemplary embodiment of the invention.

FIG. 8 is a flowchart illustrating a method for sharing an application by a portable terminal not recognizing an icon according to an exemplary embodiment of the invention.

FIG. 9 illustrates markers including application information according to an exemplary embodiment of the invention.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. It will be understood that for the purposes of this disclosure, "at least one of each" will be interpreted to mean any combination the enumerated elements following the respective language, including combination of multiples of the enumerated elements. For example, "at least one of X, Y, and Z" will be construed to mean X only, Y only, Z only, or any combination of two or more items X, Y, and Z (e.g. XYZ, XZ, YZ, X). Throughout the drawings and the detailed description, unless otherwise described, the same drawing reference numerals are understood to refer to the same elements, features, and structures. The relative size and depiction of these elements may be exaggerated for clarity, illustration, and convenience.

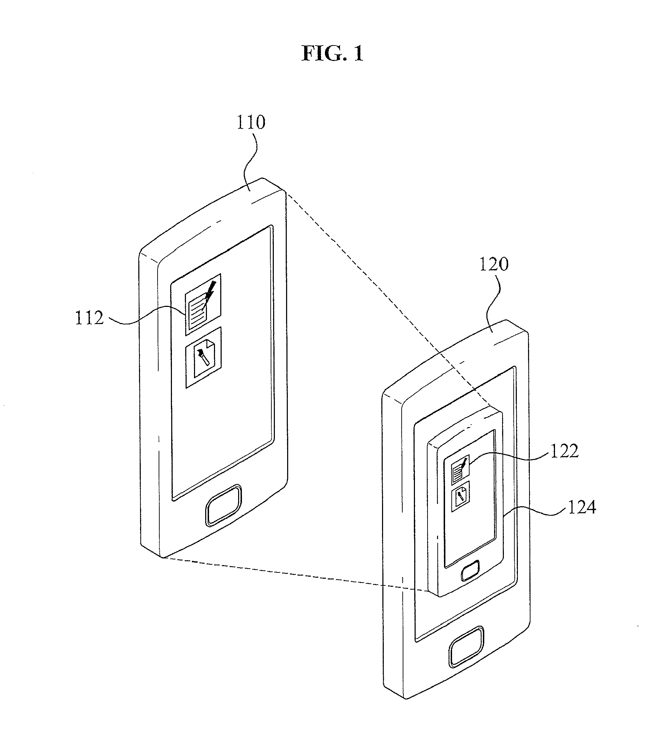

The exemplary embodiments of the present invention may provide a system to share an application by portable terminals which may facilitate installing an application using application sharing and share information already used by a user. The system for sharing an application according to an embodiment of the present invention is described below with reference to FIG. 1.

FIG. 1 illustrates a system to share an application according to an exemplary embodiment of the invention.

Referring to FIG. 1, the system of the present invention may include portable terminals 110 and 120 to share an application.

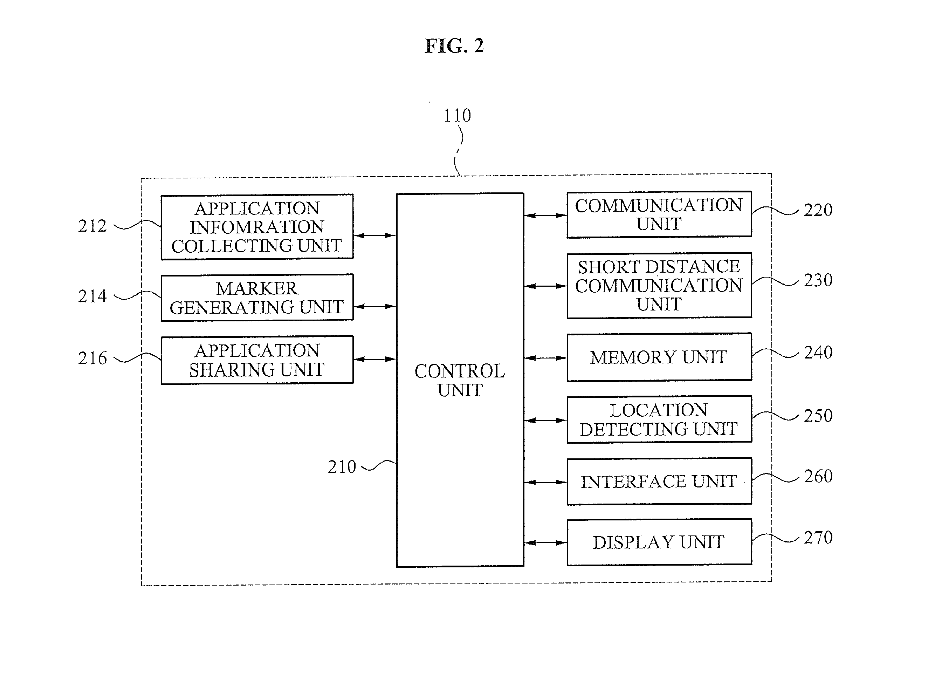

As shown in FIG. 1, the first portable terminal 110 displays a marker 112. In an example, marker 112 may include application information. Discussion of application information is provided in the discussion of FIG. 2 provided below. In an example, the marker 112 may be displayed as an icon, a barcode, or a combination of an icon and a barcode.

To receive an application stored in the first portable terminal 110, a second portable terminal 120 takes an image 124 of the marker 112 to provide for a marker image 122. In an example, the second portable terminal 120 may further recognize the marker image 122 on the image 124, analyze the marker image 122 to extract application information, and install an application corresponding to the marker image 122 using the application information included in the marker image 122.

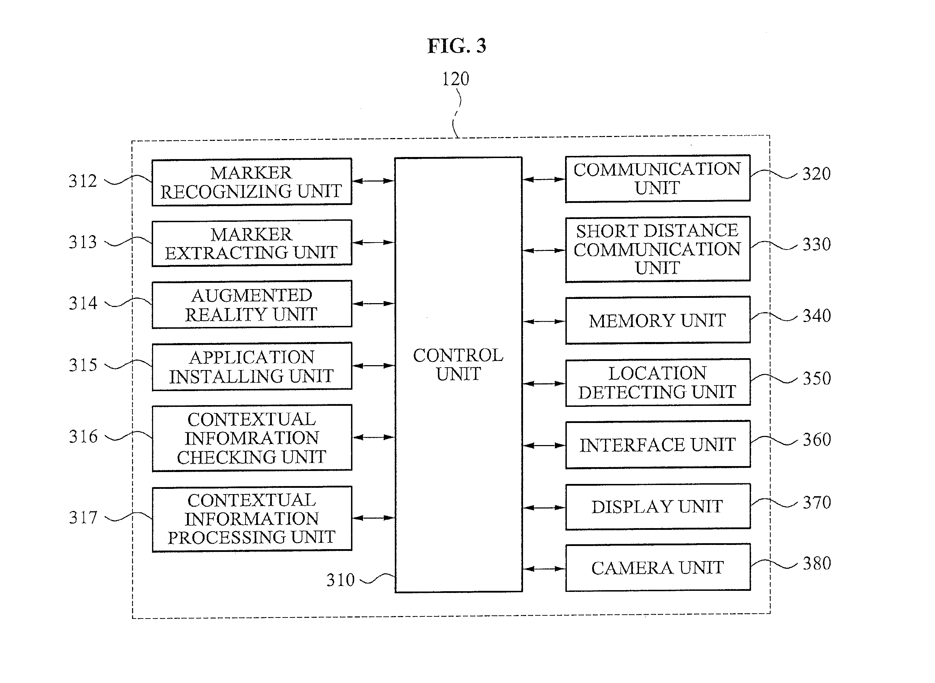

The first portable terminal 110 and the second portable terminal 120 to share an application are described in more detail below with reference to FIG. 2 and FIG. 3.

FIG. 2 illustrates a structure of the first portable terminal 110 to share an application according to an exemplary embodiment of the invention.

As shown in FIG. 2, the first portable terminal 110 includes a control unit 210, an application information collecting unit 212, a marker generating unit 214, an application sharing unit 216, a communication unit 220, a short distance communication unit 230, a memory unit 240, a location detecting unit 250, an interface unit 260, and a display unit 270.

The communication unit 220 may perform data transmission via conventional data transmission methods, such as wireless data transmission and the like. More specifically, the communication unit 220 may perform channel coding and spread data to be sent. Conversely, the communication unit 220 may also de-spread the received data and perform channel decoding. In an example, the communication unit 220 may access a social network service (SNS) (e.g. facebook®) server and transmit data to the SNS server.

The short distance communication unit 230 may establish a short-distance wireless communication connection with the second portable terminals 120 and exchange data with the second portable terminal 120, by transmitting or receiving data. In an example, the short-distance wireless communication used may include wireless fidelity (Wi-Fi), Bluetooth®, infrared communication, and the like.

The memory unit 240 may store an operating system to control the first portable terminal 110, an application program, and memory data (for example, a telephone number, a short message service (SMS) message, a compressed image file, a moving image, and the like). In addition, the memory unit 240 may also store user related information.

The location detecting unit 250 may detect location information of the first portable terminal 110. In an example, the detected location information may be used to execute an application or may be provided as contextual information of application information. Accordingly, if the first portable terminal 110 is determined to be in a business location, the first portable terminal 110 may initiate a business card exchange application so the users of the device may readily exchange contact information with the second portable terminal 120. The location may be detected, for example, by using a global positioning system (GPS) signal, neighboring base stations, calculating the distance from nearby objects of which a location is known, or the like.

The interface unit 260 may provide a user interface to receive an input of the user in the first portable terminal 110. The user input received by the first portable terminal 110 may include initiating an application sharing event, selection of an application to be shared, and the like.

The display unit 270 may display operational information (or an indicator) of the first portable terminal 110. In an example, the operational information may include numbers and characters, a moving picture and a still picture, and the like. Also, the display unit 270 may display a marker corresponding to an application to be shared. In an example, the marker may be displayed in the form of an icon, a barcode, or a combination of an icon and a barcode.

The application information collecting unit 212 may collect application information, which may include installation information and contextual information of an application. In addition, the application information collecting unit 212 may also collect communication connection information to connect to a second portable terminal 120. Further, the communication connection information may be used to connect to the second portable terminal 120 by a short communication connection or by other conventional connection methods.

In an example, the installation information may be used to install an application, and may include a name of the application, identity information of the application, uniform resource locator (URL) information of the application, allowable age information of the application, installable equipment information of the application, and the like.

The contextual information may be set, changed or managed through the first portable terminal 110, and may also indicate the characteristic information of the user. Characteristic information of the user may include usage of certain applications by the user, such as the frequency and duration of use. The contextual information may include setting information of the application, usage frequency information of the user, usage time information of the user, location information, management information of the application, and the like. The contextual information may be shared or not, based on a configuration setting of the first portable terminal 110. In other words, the contextual information may be set by the user through the first portable terminal 110 to be specifically shared or not shared. Alternatively, the contextual information may be determined to be shared automatically based upon a reference condition. For example, if the second portable terminal 120 corresponds to one of the personal contacts stored in the first portable terminal 110, contextual information may be automatically shared.

The type of contextual information to be provided may vary based on an application type. For example, contextual information of a SNS application may include identity information of a user if the user has registered as a friend on the SNS application. Contextual information of a restaurant guide application may include a list of restaurants registered or frequented by a user. Contextual information of a streaming service application to play music or a moving image (e.g. movie clip) may include a music play list, favorite service server URL information, and the like. Contextual information of a game application may include game records of a user, clear stage information stored by the user, communication connection information of a short distance communication connection established by a device in the case of a network game, and the like.

Further, the application information collecting unit 212 may provide the collected application information to the marker generating unit 214 or the SNS server. In an example, the SNS server may correspond to an online community of users of a corresponding application, and may also be a server to share setting information and use cases of the application.

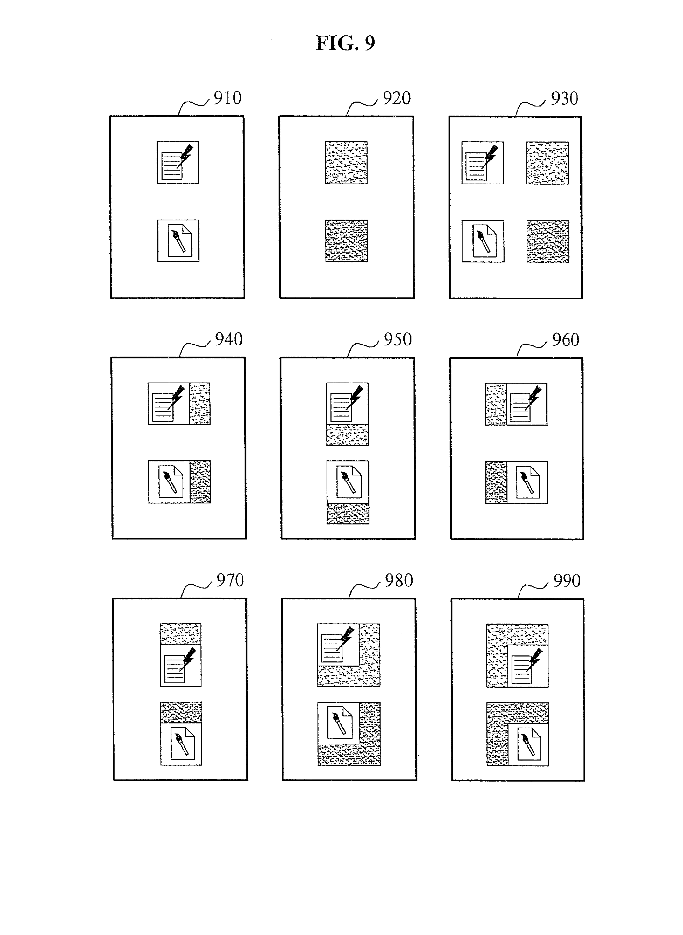

The marker generating unit 214 may generate a marker including the application information. In an example, the marker generating unit 214 may generate a marker as an icon, a barcode, or a combination of an icon and a barcode. In an example, the marker generating unit 214 may generate a marker if one or more devices are capable of displaying contextual information. The marker generating unit 214 may generate a marker as shown in FIG. 9.

FIG. 9 illustrates markers including application information according to an exemplary embodiment of the invention. Referring to FIG. 9, a first marker 910 may be outputted as an icon. A second marker 920 may be outputted as a barcode. In an example, the barcode may be provided as a two-dimensional barcode, which may be read by a computerized device, such as the second portable terminal 120. A third marker 930 may be outputted as a combination of an icon and a barcode next to the icon. A fourth marker 940 may be outputted as a combination of an icon and a barcode connected to the icon rightward. A fifth marker 950 may be outputted as a combination of an icon and a barcode connected to the icon downward. A sixth marker 960 may be outputted as a combination of an icon and a barcode connected to the icon leftward. A seventh marker 970 may be outputted as a combination of an icon and a barcode connected to the icon upward. An eighth marker 980 may be outputted as a combination of an icon and a barcode connected to the icon rightward and downward. A ninth marker 990 may be outputted as a combination of an icon and a barcode connected to the icon leftward and upward.

The application sharing unit 216 may display the marker generated by the marker generating unit 214 on the display unit 270 if an application sharing event occurs. In an example, the application sharing unit 216 may determine an occurrence of an application sharing event has occurred if the application sharing unit 216 receives a request to share an application by another portable terminal, such as the second portable terminal 120. In an example, such a request to share an application may be performed through the short distance communication unit 230, or by other conventional communicative methods.

If the application sharing unit 216 displays a marker including communication connection information and receives a request to make a communication connection from the second portable terminal 120 using the communication connection information. If the first portable terminal 110 receives such as request, the application sharing unit 216 may establish a short distance communication connection with the second portable terminal 120 through the short distance communication unit 230 and transmit an application or data related to the application to the second portable terminal 120 via the short distance communication. In an example, the data related to the application to be transmitted may be a large amount of data, such as a music file or a moving image file.

The control unit 210 may control an operation of the first portable terminal 110 to share an application. In an example, the control unit 210 may perform functions of the application information collecting unit 212, the marker generating unit 214 and the application sharing unit 216. Although FIG. 2 illustrates the enumerated units individually for ease of description, the control unit 210 may be configured to perform each of the described functions. Alternatively, the control unit 210 may also perform a portion of each of the described functions.

FIG. 3 illustrates a structure of the second portable terminal 120 to share an application according to an exemplary embodiment of the invention.

Referring to FIG. 3, the second portable terminal 120 includes a control unit 310, a marker recognizing unit 312, a marker extracting unit 313, an augmented reality unit 314, an application installing unit 315, a contextual information checking unit 316, a contextual information processing unit 317, a communication unit 320, a short distance communication unit 330, a memory unit 340, a location detecting unit 350, an interface unit 360, a display unit 370, and a camera unit 380.

The communication unit 320 may perform data transmission via data transmission methods, such as wireless data transmission and the like. More specifically, the communication unit 320 may perform channel coding and spread data to be sent. Conversely, the communication unit 320 may also de-spread the received data and perform channel decoding. Accordingly, the communication unit 320 may communicate with an application management server, an application providing server and a SNS server. Further, the communication unit 320 may transmit data to the servers, as well as receive data from the servers.

In an example, the application management server may provide setting information of an application corresponding to an icon, or additional information of the application. Here, the additional information of an application may be information about the application other than the setting information, such as, a name of the application programmer, a development company, a vendor, or a version of the application. The application providing server may provide an installable application. Also, the application providing server may provide the application or application related data to be downloaded and installed. In an example, the SNS server may serve as both the application management server and the application providing server. More specifically, the SNS server may be an online community of users of a corresponding application, and may also be a server to share setting information, and use cases, and other information related to the application.

The short distance communication unit 330 may establish a short distance wireless communication connection to the first portable terminal 110, and may transmit and receive data to and from the first portable terminal 110. In this instance, the short distance communication used may include Wi-Fi, Bluetooth®, infrared communication, and the like.

The memory unit 340 may store an operating system to control an operation of the second portable terminal 120, an application program, and memory data (for example, a telephone number, a SMS message, a compacted image file, a moving image file, and the like). In addition, the memory unit 340 may also store an application shared by the first portable terminal 110 and related application information of the shared application identified using a marker.

The location detecting unit 350 may detect location information of the second portable terminal 120. In an example, the detected location information may be used to install or execute an application. Accordingly, if the second portable terminal 120 is within a reference proximity, the first portable terminal may initiate application sharing program. The initiation may be automatic. Alternatively, if the second portable terminal 120 is within a reference proximity in a business environment, the first portable terminal 110 may initiate a business card exchange application so the users of the device may readily exchange contact information. The location may be detected, for example, by using a GPS signal, neighboring base stations, calculating the distance from nearby objects of which a location is known, or the like.

The interface unit 360 may provide a user interface to receive an input of the user in the second portable terminal 120. The user input received by the second portable terminal 120 may include initiating an application sharing event, selection of an application to be shared, and the like.

The display unit 370 may display operational information (or an indicator) of the second portable terminal 120. In an example, operational information may include numbers and characters, a moving picture and a still picture, and the like. Also, the display unit 370 may display an image (a marker) received from the camera unit 380 and may display application information using augmented reality.

The camera unit 380 may provide an image or a preview image taken by a photographing device to the marker recognizing unit 312 and the display unit 370. In an example, the acquired image may be corrected through image correction prior to the image to the marker recognizing unit 312 and the display unit 370. The acquired image may be corrected through camera correction or other similar conventional image correction methods.

In this instance, the image or the preview image taken by the camera unit 380 of the second portable terminal 120 to recognize a marker may be an image of a marker outputted through the display unit 270 of the first portable terminal 110. Alternatively, the obtained image may be of a marker outputted through a monitor of a personal computer, a marker printed on a printed matter, or the like. Accordingly, the marker image including application information may be provided through different sources.

The marker recognizing unit 312 may recognize a marker on the image acquired by the camera unit 380. In an example, the marker recognizing unit 312 may recognize a marker in an area designated by a user on the image. If the marker recognizing unit 312 recognizes a marker in an area designated by a user, a load on the second portable terminal 120 may be reduced as the area to be searched for the marker may be reduced.

The marker extracting unit 313 may extract application information included in the marker recognized by the marker recognizing unit 312.

The augmented reality unit 314 may display the extracted application information on the display unit 370 using augmented reality. Also, the augmented reality unit 314 may display additional information of an application received via the application management server using augmented reality. For example, if a user of the second portable terminal 120 touches a marker on an image displayed on the display unit 370 with a finger, the augmented reality unit 314 may display application information corresponding to the touched marker next to the marker on the display unit 370.

The application installing unit 315 may install an application using the application information. If a marker includes application information, the application installing unit 315 may retrieve installation information, such as the URL information, of an application corresponding to the icon via the application management server or from the icon itself. Further, the application installing unit 315 may access the application providing server using the installation information, and download the application to install the application. More specifically, if installation URL information is identified in the application information, the application installing unit 315 may communicate with the application providing server, download the corresponding application from the application providing server, and install the application. Alternatively, if URL information is unable to be identified from the application information, the application installing unit 315 may access the application management server to obtain the URL information, then communicate with the application providing server to download an application from the application providing server and install the application.

Alternatively, if communication connection information is included in the application information, the application installing unit 315 may request a connection using the communication connection information. In addition, if a short distance communication is established by the short distance communication unit 330, the application installing unit 315 may receive an application or data related to the application from the first portable terminal 110 via the short distance communication, and install the received application. In an example, the received data related to the application may be a large amount of data to be transmitted using a marker, such as, a music file or a moving image file in the case of a streaming service application. In the case of a cooking application, the data related to the application may be various cooking recipes. In the case of a game application, the data related to the application may be control information used in a network game using a short distance communication.

The contextual information checking unit 316 may identify application information, check whether contextual information is included in the application information, and retrieve the contextual information if the contextual information is included in the application information. Alternatively, the contextual information checking unit 316 may receive contextual information from the first portable terminal 110 through the short distance communication unit 330.

The contextual information processing unit 317 may process the contextual information based on a type of the contextual information included in the application information. For example, if contextual information is identity information of a user of a SNS application, the contextual information processing unit 317 may register the user corresponding to the identity information as a friend in the SNS application. If contextual information is a list of restaurant for a restaurant guide application, the contextual information processing unit 317 may register the list of restaurant in the restaurant guide application.

The control unit 310 may control an operation of the second portable terminal 120. In an example, the control unit 310 may perform functions of the marker recognizing unit 312, the marker extracting unit 313, the augmented reality unit 314, the application installing unit 315, the contextual information checking unit 316 and the contextual information processing unit 317. Although FIG. 3 illustrates the above described units individually for ease of description, the control unit 310 may be configured to perform one or more of the described functions in actual products. Alternatively, the control unit 310 may also perform a portion of one or more of the described functions.

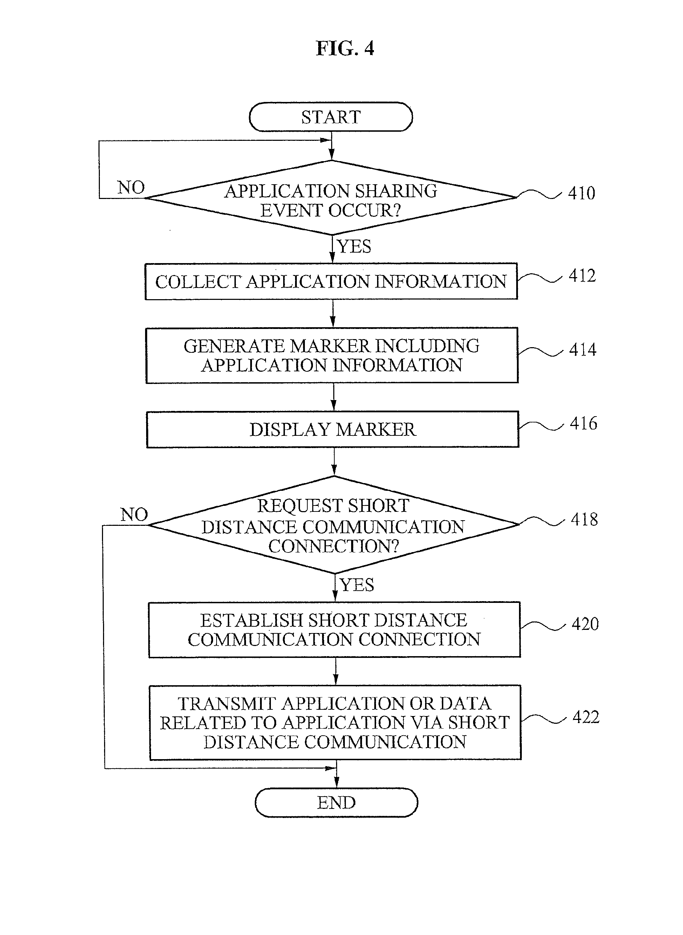

Hereinafter, a method for sharing an application between the above-configured first portable terminal 110 and second portable terminal 120 is described below with reference to FIG. 4, FIG. 5, FIG. 6, FIG. 7, and FIG. 8.

FIG. 4 is a flowchart illustrating a method for sharing an application by the first portable terminal 110 according to an exemplary embodiment of the invention.

Referring to FIG. 4, if the first portable terminal 110 detects occurrence of an application sharing event in operation 410, the first portable terminal 110 may collect application information in operation 412. In an example, the application information may include at least one of a name of an application, identity information of the application, URL information of the application, allowable age information of the application, installable equipment information of the application, communication connection information of the application, and contextual information of the application. The contextual information may include at least one of setting information of the application, usage frequency information of a user, usage time information of the user, location information, and management information of the application.

In operation 414, the first portable terminal 110 may generate a marker including the application information. In this instance, the marker may be generated as an icon, a barcode, and a combination of an icon and a barcode.

In operation 416, the first portable terminal 110 may display the marker. The marker may be displayed as one of the exemplary markers illustrated in FIG. 9.

In operation 418, the first portable terminal 110 may check whether a request for a short distance communication connection exists.

If the first portable terminal 110 receives a request for a short distance communication connection in operation 418, the first portable terminal 110 may establish a short distance communication connection in operation 420, and may transmit the application or data related to the application to the second portable terminal 120 via the short distance communication, in operation 422. Alternatively, if the first portable terminal 110 does not receive the request for a short distance communication connection in operation 418, the process may end without transmitting the application or data related to the application.

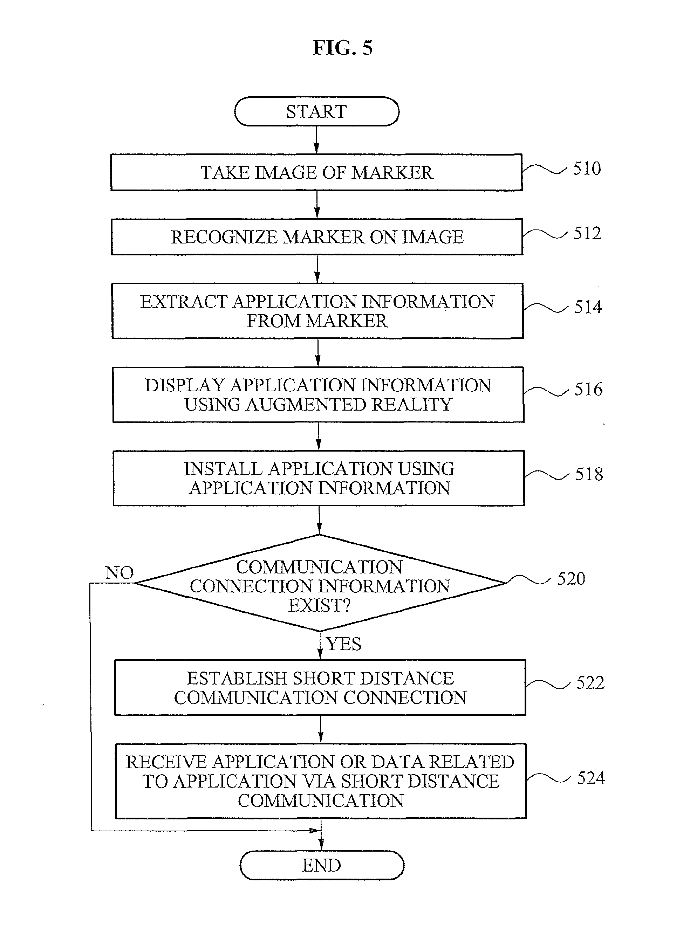

FIG. 5 is a flowchart illustrating a method for sharing an application by the second portable terminal 120 according to an exemplary embodiment of the invention.

Referring to FIG. 5, in operation 510, the second portable terminal 120 may take an image of a marker displayed on the first portable terminal 110. In an example, the marker may be displayed as an icon, a barcode, and a combination of an icon and a barcode.

In operation 512, the second portable terminal 120 may recognize the marker on the image for each reference marker area. In an example, the reference marker area may be selected by a user or may be automatically configured.

In operation 514, the second portable terminal 120 may extract application information included in the marker. In an example, the application information may include at least one of a name of the application, identity information of the application, URL information of the application, allowable age information of the application, installable equipment information of the application, communication connection information of the application, and contextual information of the application. The contextual information may include at least one of installation information of the application, usage frequency information of a user, usage time information of the user, location information, and management information of the application managed by the user.

In operation 516, the second portable terminal 120 may display the application information using augmented reality.

In operation 518, the second portable terminal 120 may install the application using the application information if the second portable terminal 120 receives an input from the user to install the application. The second portable terminal 120 may check whether the contextual information is included in the application and install the application. If the application has been installed, the application may be set according to the setting information included in the contextual information.

In operation 520, the second portable terminal 120 may check whether communication connection information is included in the application information. In an example, communication connection information may be used to transmit and receive information via a short distance communication.

If communication connection information is included in the application information in operation 520, the second portable terminal 120 may establish a short distance communication connection to the first portable terminal 110 using the communication connection information, in operation 522.

In operation 524, the second portable terminal 120 may request the application or data related to the application to the first portable terminal 110 via the short distance communication and receive the application or the data from the first portable terminal 110.

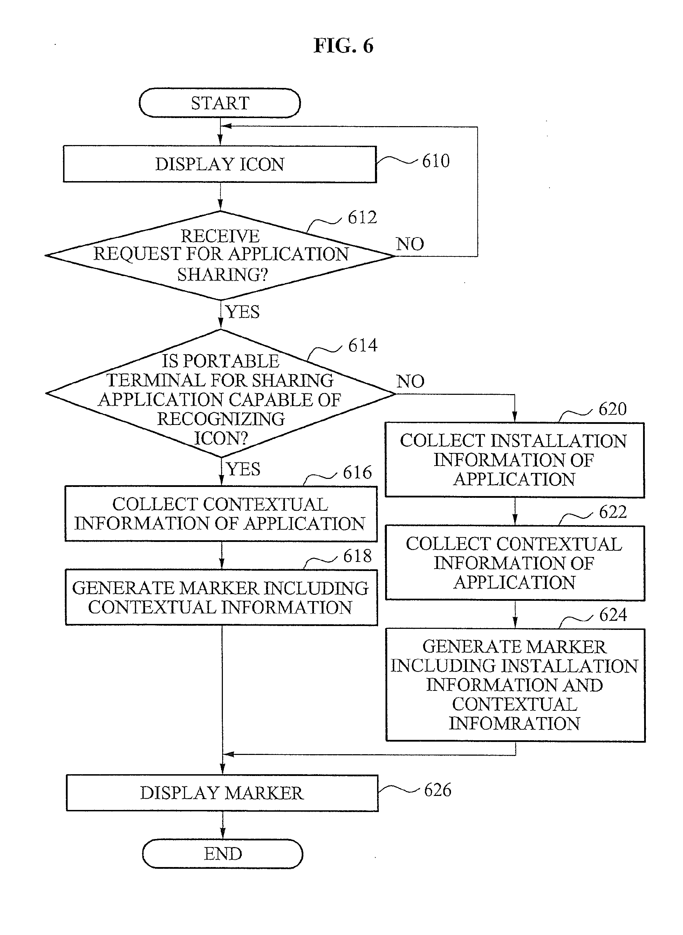

FIG. 6 is a flowchart illustrating a method for sharing an application based on a function for recognizing an icon according to an exemplary embodiment of the invention.

Referring to FIG. 6, in operation 610, the first portable terminal 110 may display an icon.

If the first portable terminal 110 receives a request for application sharing in operation 612, the first portable terminal 110 may check whether the second portable terminal 120 is capable of recognizing a marker including application information, such as an icon, in operation 614. In an example, the request for application sharing may be provided by a user input in the first portable terminal 110 or via a short distance wireless communication from the second portable terminal 120. Then, the first portable terminal 110 may determine whether the second portable terminal 120 is capable of recognizing the icon. In an example, the determination whether the second portable terminal 120 is capable of recognizing the icon may be provided by a user input in the first portable terminal 110 or via a short distance wireless communication from the second portable terminal 120.

If the first portable terminal 110 determines that the second portable terminal 120 is capable of recognizing the icon in operation 614, the first portable terminal 110 may collect contextual information of the application in operation 616. In operation 618, the first portable terminal 110 may generate a marker including application information, such as the contextual information.

Alternatively, if the first portable terminal 110 determines that the second portable terminal 120 is not capable of recognizing the icon in operation 614, the first portable terminal 110 may collect installation information of the application in operation 620, and may further collect contextual information of the application in operation 622. In operation 624, the first portable terminal 110 may generate a marker including both the installation information and the contextual information of the application.

In operation 626, the first portable terminal 110 may display the marker generated in operation 616.

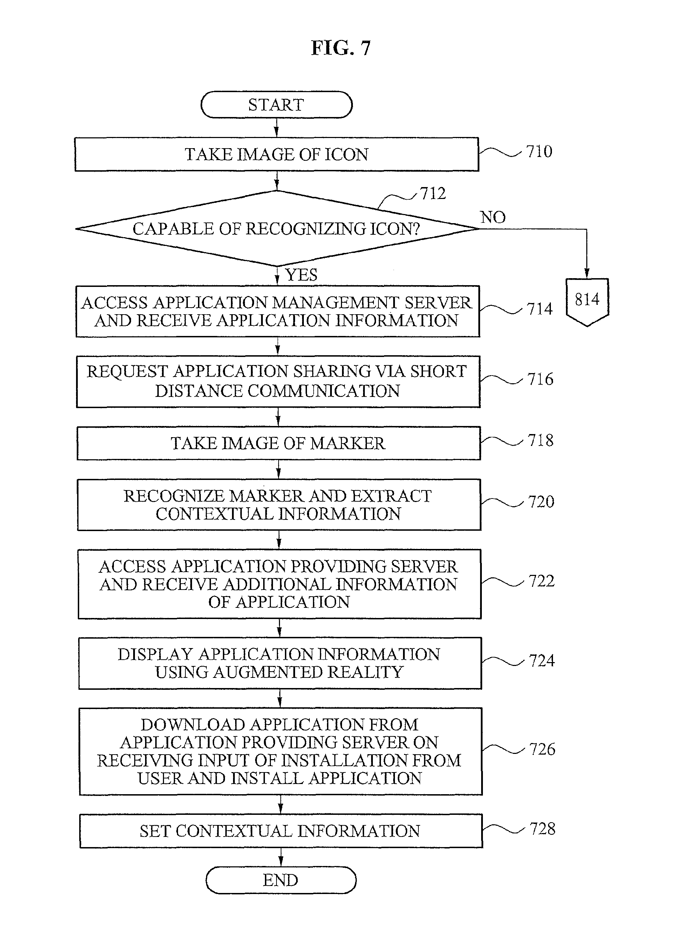

FIG. 7 is a flowchart illustrating a method for sharing an application by a portable terminal for recognizing an icon according to an exemplary embodiment of the invention.

Referring to FIG. 7, in operation 710, the second portable terminal 120 may take an image of the icon displayed on the first portable terminal 110.

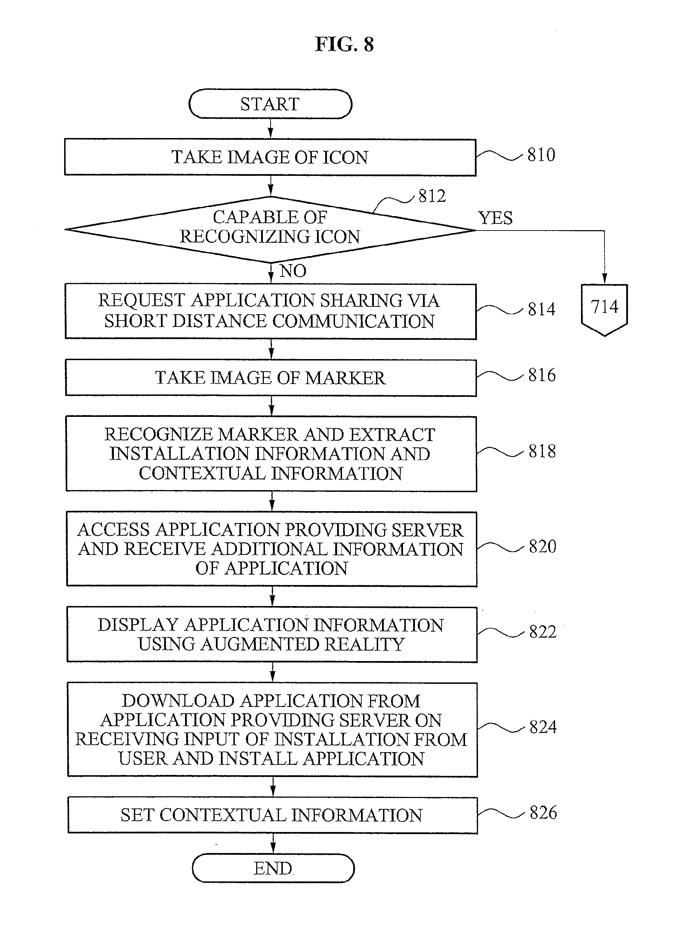

In operation 712, the second portable terminal 120 may determine whether the second portable terminal 120 is capable of recognizing the marker including application information, represented in a form such as an icon. If the second portable terminal 120 is determined to be not capable of recognizing the icon in operation 712, the second portable terminal 120 may proceed with operation 814 of FIG. 8.

Alternatively, if the second portable terminal 120 is determined to be capable of recognizing the icon in operation 712, the second portable terminal 120 may access an application management server and receive application information in operation 714. In an example, the application information may be installation information of the application. More specifically, the installation information of the application may be used to install the application, and may include a name of the application, identity information of the application, URL information of the application, allowable age information of the application, installable equipment information of the application, and the like.

In operation 716, the second portable terminal 120 requests to share an application via a short distance communication. In operation 718, the second portable terminal 120 may take an image of a marker displayed on the first portable terminal 110. In an example the displayed marker may include at least one of contextual information, installation information, and communication connection information. In operation 720, the second portable terminal 120 recognizes the marker on the displayed image and extracts application information, such as the contextual information from the marker.

In operation 722, the second portable terminal 120 may access an application providing server to download the application and receive additional application information. In an example, the additional information of the application may be information about the application other than setting information of the application. Additional information may include, for example, a name of a programmer, a development company, a vendor or a version of the application. The additional information of the application may be received via an application management server.

In operation 724, the second portable terminal 120 may display the installation information and the additional information of the application using augmented reality.

In operation 726, the second portable terminal 120 may download the application from the application providing server and install the application, if the second portable terminal 120 receives a user input to install the application.

In operation 728, the second portable terminal 120 may set the contextual information extracted in operation 720 after the application is installed.

FIG. 8 is a flowchart illustrating a method for sharing an application by a portable terminal not recognizing an icon according to an exemplary embodiment of the invention.

Referring to FIG. 8, in operation 810, the second portable terminal 120 may take an image of an icon displayed on the first portable terminal 110.

In operation 812, the second portable terminal 120 may determine whether the second portable terminal 120 is capable of recognizing the icon. If the second portable terminal 120 is determined to be capable of recognizing the icon in operation 812, the second portable terminal 120 may proceed to operation 714 of FIG. 7.

Alternatively, if the second portable terminal 120 is determined to be not capable of recognizing the icon in operation 812, the second portable terminal 120 may request an application sharing to the first portable terminal 110 via a short distance communication in operation 814.

In operation 816, the second portable terminal 120 may take an image of a marker including application information. In an example, the application information may include installation information and contextual information of the application. In operation 818, the second portable terminal 120 may recognize the marker on the image and extract the installation information and the contextual information of the application from the marker.

In operation 820, the second portable terminal 120 may access an application providing server and receive additional information of the application.

In operation 822, the second portable terminal 120 may display the installation information and the additional information of the application using augmented reality.

In operation 824, the second portable terminal 120 may download the application from the application providing server and install the application, if the second portable terminal 120 receives a user input to install the application.

In operation 826, the second portable terminal 120 may set the contextual information extracted in operation 720 after the application is installed.

A method for sharing an application between the first portable terminal 110 and the second portable terminal 120 described above according to an exemplary embodiment of the invention is described below.

Although not illustrated, if a user of the second portable terminal 120 selects a marker on an image, the second portable terminal 120 may retrieve application information corresponding to the selected marker and transmit the application using a text message to another user selected by the user or to a reference user.

In an example, a businessman may output a marker on a web page that introduces applications or web contents, or may output a marker on a printed matter. A user may take an image of the marker on the web page using the second portable terminal 120, and register the corresponding web page in the second portable terminal 120 or install an application on the second portable terminal 120.

The exemplary embodiments according to the present invention may be recorded in non-transitory computer-readable media including program instructions to implement various operations embodied by a computer. The media may also include, alone or in combination with the program instructions, data files, data structures, and the like. The media and program instructions may be those specially designed and constructed for the purposes of the present invention, or they may be of the kind well-known and available to those having skill in the computer software arts.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.
A method for sharing an application between a first portable terminal and a second portable terminal includes the first portable terminal collecting application information if an application sharing event occurs, generating a marker including the application information, and displaying the marker; and the second portable terminal capturing an image of the marker including application information, recognizing the marker, extracting the application information from the marker, and installing an application corresponding to the application information from the marker. The first portable terminal includes a marker generating unit to generate the marker including the application information, and a display unit to display the marker. The second portable terminal includes a camera unit to capture an image of the marker, a marker recognizing unit to recognize the marker, a marker analyzing unit to extract the application information from the marker, and an application installing unit to install the application.

## Claims

1. A portable terminal to share an application, comprising:
a marker generating unit adapted to collect application information and to generate a marker comprising the application information;
a display unit adapted to display the marker; and
an application sharing unit adapted to control the marker generated by the marker generating unit to be displayed on the display unit if an application sharing event occurs.

2. The portable terminal of claim 1, wherein the application information comprises at least one of a name of the application, identity information of the application, installation information of the application comprising uniform resource locator (URL) information, allowable age information of the application, installable equipment information of the application, communication connection information of the application, and contextual information of the application.

3. The portable terminal of claim 2, wherein the contextual information comprises at least one of setting information of the application, a usage frequency information of a user, time information of the user, location information, and management information of the application managed by the user.

4. The portable terminal of claim 2 or 3, wherein the marker generating unit is adapted to generate the marker as an icon, a barcode, or a combination of an icon and a barcode.

5. The portable terminal of any of claims 1 to 4, further comprising:
a short distance communication unit adapted to establish a short distance communication connection and to perform a data transmission,
wherein the application sharing unit is adapted to determine that the application sharing event has occurred, if the application sharing unit receives the request to share the application from a first portable terminal, or receives the request to share the application via the short distance communication unit from a second terminal.

6. The portable terminal of any of claims 1 to 5, further comprising:
a short distance communication unit adapted to establish a short distance communication connection using communication connection information and adapted to perform a data transmission,
wherein the marker generating unit is adapted to generate the marker comprising the communication connection information, and
wherein the application sharing unit is adapted to receive the request to share the application by the second portable terminal via the short distance communication and to transmits the application or data related to the application to the second portable terminal connected via the short distance communication.

7. A method for sharing an application between a first portable terminal and a second portable terminal, the method comprising:
collecting application information in the first portable terminal if an application sharing event occurs;
generating a marker comprising the application information; and
displaying the marker.

8. The method of claim 7, wherein the displaying of the marker comprises generating the marker as an icon, a barcode, or a combination of an icon and a barcode.

9. The method of claim 7 or 8, wherein the generating of the marker comprises generating the marker comprising communication connection information for establishing a short distance communication connection,
wherein the method further comprises:
receiving a request for communication connection using the communication connection information and establishing a short communication connection; and
transmitting the application or data related to the application to the second portable terminal connected via the short distance communication,
the application sharing event preferably occurring if a request for application sharing is received from the first portable terminal or from the second portable terminal via a short distance communication.

10. A portable terminal to share an application, comprising:
a camera unit adapted to capture an image of a marker comprising application information;
a marker recognizing unit adapted to recognize the marker;
a marker analyzing unit adapted to extract the application information from the marker; and
an application installing unit adapted to install the application corresponding to the application information of the marker.

11. The portable terminal of claim 10, wherein the image of the marker comprises an icon, a barcode, or a combination of the icon and the barcode.

12. The portable terminal of claim 10 or 11, wherein the application information comprises at least one of a name of the application, identity information of the application, installation information comprising uniform resource locator (URL) information of the application, allowable age information of the application, installable equipment information of the application, communication connection information of the application, and contextual information of the application,
and, preferably, wherein the contextual information comprises at least one of setting information of the application, a usage frequency information of a user, time information of the user, location information, and management information of the application managed by the user.

13. The portable terminal of any of claims 10 to 12, further comprising:
a contextual information checking unit adapted to check contextual information the application information comprising the contextual information; and
a contextual information processing unit adapted to process the contextual information based on a type of the contextual information,
and, preferably, further comprising:
a short distance communication unit to establish a communication connection and to perform a data transmission,
wherein the contextual information checking unit is adapted to receive the contextual information of the application from a second portable terminal connected to the portable terminal via the short distance communication unit.

14. The portable terminal of any of claims 10 to 13, further comprising:
an augmented reality unit adapted to display the application information using augmented reality.

15. The portable terminal of any of claims 10 to 14, further comprising:
a communication unit adapted to communicate with an application providing server or an application management server,
wherein the application installing unit is adapted to communicate with the application providing server using the installation information, to download the application from the application providing server, and to install the application, if installation information is identified in the application information,
wherein the application installing unit is further adapted to access the application management server to obtain the installation information, to communicate with the application installing unit, to download the application from the application providing server, and to install the application, if installation information is not identified from the application information.

16. The portable terminal of any of claims 7 to 15, wherein the application installing unit is adapted to retrieve installation information corresponding to the icon, to download an application using the installation information, and to install the application, if the marker is displayed as an icon.

17. The portable terminal of any of claims 7 to 16, further comprising:
a short distance communication unit adapted to establish a short distance communication connection using communication connection information and to perform a data transmission,
wherein the application installing unit is dapated to request a short distance communication connection using the communication connection information, if the communication connection information is identified in the application information, and the application installing unit is further adapted to receive the application or data related to the application from a second portable terminal connected via the short distance communication, and to install the application, if the short distance communication connection is established by the short distance communication unit.

18. A method for sharing an application between portable terminals, comprising:
capturing an image of a marker comprising application information;
recognizing the marker;
extracting the application information from the marker; and
installing an application corresponding to the application information from the marker.

19. The method of claim 18, further comprising:
determining whether contextual information is identified in the application information; and
processing the contextual information based on a type of the contextual information.

20. The method of claim 18 or 19, wherein the extracting of the application information further comprises displaying the application information using augmented reality.

21. The method of any of claims 18 to 20, wherein the installing of the application comprises:
communicating with an application providing server using installation information, downloading an application from an application providing server, and installing the application, if the installation information is identified in the application information,
communicating with an application management server to obtain the installation information, communicating with the application providing server, downloading an application from the application providing server, and installing the application, if the installation information is not identified in the application information.

22. The method of any of claims 18 to 21, wherein the installing of the application comprises:
requesting a short distance communication connection using communication connection information if the communication connection information is included in the application information, and receiving the application or data related to the application from a portable terminal connected via the short distance communication, and installing the application, if the short distance communication connection is established.
